# EUROPÄISCHE PATENTSCHRIFT

(11) **EP 0 791 023 B1**
(45) Veröffentlichungstag und Bekanntmachung des Hinweises auf die Patenterteilung: **07.01.1999**
(21) Anmeldenummer: 95939237.4
(22) Anmeldetag: 07.11.1995
(51) Int. Cl.: C08F 220/00, C11D 3/37

(54) **VERFAHREN ZUR HERSTELLUNG VON TERPOLYMEREN**
PROCESS FOR PREPARING TERPOLYMERS
PROCEDE DE PRODUCTION DE TERPOLYMERES

(30) Priorität: 09.11.1994 DE 4439978
(43) Veröffentlichungstag der Anmeldung: 27.08.1997
(73) Patentinhaber: STOCKHAUSEN GmbH & CO. KG, 47805 Krefeld (DE)
(72) Erfinder: HEIDEL, Klaus, D-45772 Marl (DE); RUBACK, Wulf, D-48249 Dülmen (DE); KRAUSE, Frank, D-47533 Kleve (DE)
(74) Vertreter: Klöpsch, Gerald, Dr.-Ing. Patentanwalt
(86) Internationale Anmeldenummer: EP9504376
(87) Internationale Veröffentlichungsnummer: WO9615165

(56) Entgegenhaltungen:
- EP-A- 0 076 992
- WO-A-94/15978
- US-A- 5 319 020

## Beschreibung

Die Erfindung betrifft ein verbessertes Verfahren zur Herstellung von Terpolymeren aus
a) einer monoethylenisch ungesättigten C4- bis C6-Dicarbonsäure,
b) einer monoethylenisch ungesättigten C3- bis C5-Monocarbonsäure und
c) einem keine freien Carboxylgruppen enthaltenden, olefinisch ungesättigten Monomer durch radikalisch initiierte Copolymerisation in wäßrigem Medium.

Carboxylgruppenhaltige Terpolymere zeigen z. T. eine gute biologische Abbaubarkeit und finden Verwendung als vergrauungs- und inkrustierungsinhibierende Zusätze in phosphatfreien und phosphatreduzierten Wasch- und Reinigungsmitteln. Phosphatreduziert sind dabei die Wasch- und Reinigungsmittel, die weniger als 25 Gewichtsprozent Natriumphosphat enthalten.

In den Markt sind vor allem solche phosphatfreien oder phosphatreduzienen Produkte eingeführt worden, die neben oberflächenaktiven Stoffen wasserunlösliche Ionenaustauscher auf Basis von Zeolith oder Schichtsilikat als sogenannte Gerüststoffe (Builder) enthalten. Da diese Silikate jedoch aufgrund ihrer spezifischen Eigenschaften nicht allein die Phosphate als Builder ersetzen können, werden sie in ihrer Wirkung unterstützt von wasserlöslichen Zusatzstoffen, bei denen es sich meist um carboxylgruppenhaltige Verbindungen, wie Zitronensäure oder Nitrilotriessigsäure, vor allem jedoch um carboxylgruppenhaltige Polymere oder deren Salze handelt. Diese Zusatzstoffe werden als Cobuilder bezeichnet. Wirtschaftliche Bedeutung haben in diesem Zusammenhang Homopolymere der Acrylsäure sowie Copolymere aus Acrylsäure und Maleinsäure mit Molmassen von ca. 30 000 bis 120 000 erlangt.

Ein Herstellungsverfahren für Copolymere aus Acrylsäure und Maleinsäure durch radikalisch initiierte Copolymerisation in wäßriger Lösung ist nach EP-A-0 075 820 bekannt. Ein derartiges Polymerisationsverfahren in wäßriger Lösung ist besonders geeignet zur Herstellung von Waschmittelpolymeren, da die Produkte in einer Form anfallen, die unmittelbar für den Einsatz in wäßrigen Systemen geeignet ist.

Der Einbau der in wäßriger Lösung schlecht polymerisationsfähigen Maleinsäure bzw. deren Alkalimetallsalz hängt unter anderem vom Gesamt-Neutralisationsgrad der Carbonsäuren während der Polymerisation ab. Dieser soll gemäß EP-A-0 075 820 zweckmäßigerweise 20 bis 80 % betragen. So werden Copolymerisate mit einem Restgehalt an monomerer Dicarbonsäure von weniger als 1.5 % erhalten.

Derartige Copolymere, die auch Polycarboxylate genannt werden, werden nach Tenside Surfactants Detergents 24 (1987). Seiten 366 bis 369, in Kläranlagen nur wenig biologisch abgebaut. Infolge der Anreicherung von Polycarboxylaten im Klärschlamm entsteht eine ökologische Unsicherheit hinsichtlich der Verwertung des Klärschlamms bei seiner Lagerung auf Deponien oder beim Ausbringen auf Felder und somit hinsichtlich des endgültigen Verbleibs im Boden.

Wünschenswert ist somit eine erhöhte biologische Abbaubarkeit dieser Polycarboxylate bei ihrer Verwendung als Waschmittelzusatz.

In EP-A-0 497 611 werden Terpolymere aus 10 bis 70 Mol-% einer ungesättigten Monocarbonsäure, wie Acrylsäure, 15 bis 55 Mol-% des Anhydrids einer ungesättigten Dicarbonsäure, wie Maleinsäureanhydrid, und 15 bis 55 Mol-% Vinylacetat, Vinylether oder Vinylencarbonat hergestellt. Die Produkte können anschließend partiell hydrolysiert, verseift und oxidiert werden, wobei dann Terpolymere mit verbesserter biologischer Abbaubarkeit erhalten werden.

Da die zuletzt genannten Monomeren nur wenig wasserlöslich sind, wird die Polymerisation in einem organischen Lösemittel durchgeführt. Außerdem wird in EP-A-0 497 611 auf Nachteile der Polymerisation in wäßrigem Medium hingewiesen. So sei der Einbau von schlecht wasserlöslichen Monomeren nur sehr begrenzt möglich. Vinylacetat wird teilweise in unerwünschtes Acetaldehyd übergeführt.

Auf der anderen Seite müssen bei der Polymerisation in organischem Medium zusätzliche Aufarbeitungsschritte in Kauf genommen werden:
Abtrennung der als Fällungspolymerisate anfallenden Produkte von der organischen Lösemittelphase, Trocknung bis zur Geruchsfreiheit, gesonderte Herstellung einer wäßrigen, geruchsfreien Lösung der Terpolymeren durch nachfolgende Verseifung sowie gegebenenfalls Oxidation.

Wünschenswert wäre demnach hier ein Polymerisationsverfahren, das die organischen Lösemittel vermeidet.

Bei der Homo- und Copolymerisation von Vinylacetat in wäßriger Lösung erfolgt nach Houben-Weyl, Methoden der Organischen Chemie, Band 14/1, Makromolekulare Stoffe 1, 1961, Seiten 909 bis 912, teilweise eine Hydrolyse zum Acetaldehyd, der regelnd oder hemmend in den Polymerisationsverlauf eingreift. Außerdem wird ausgeführt, daß Wasserstoffperoxid in konzentrierter Form Vinylacetat stabilisiert und somit die Umsetzung verzögert. Ferner sei es zweckmäßig, die Polymerisation von Vinylacetat in einem engen pH-Bereich von 4 bis 5 und bei der Siedetemperatur von Vinylacetat (72 °C) durchzuführen.

Nach EP-A-0 075 820 kann die Monomerenmischung zwar auch bis zu 20 Gewichtsprozent Vinylacetat enthalten. Die Polymerisationsbedingungen sind jedoch mit dem wäßrigen Lösemittel, dem Initiator Wasserstoffperoxid und den vorzugsweise eingestellten Polymerisationstemperaturen von 100 bis 130 °C für einen Einbau von Vinylacetat nicht optimal.

US 3 887 480 beschreibt die Herstellung von Terpolymeren aus (Meth)Acrylsäure, Maleinsäure und Vinylacetat in wäßrigem Medium. Dabei soll der Anteil des Vinylacetats bei 20 bis 45 Mol-% liegen. Bei der Polymerisation wird eine ungewöhnlich hohe Konzentration von über 17 Gewichtsprozent an Persulfat als Polymerisationsinitiator, bezogen auf die Gesamtmenge der Monomeren, eingesetzt. Ausweislich der Beispiele ist im allgemeinen sogar eine Initiatorkonzentration von ca. 30 Gewichtsprozent sowie eine weitere hohe Zusatzmenge von Natriumbisulfit als Beschleuniger zum Aufrechterhalten der Polymerisation unter Rückflußbedingungen des Vinylacetats erforderlich.

Die hier benötigten unökonomisch hohen Initiatormengen sind nachteilig. Ferner werden nur Terpolymere mit relativ niedrigen Molmassen von 500 bis 30 000, insbesondere von 3 000 bis 15 000, erhalten. Der bevorzugte Molmassenbereich liegt unterhalb desjenigen Bereichs, der für inkrustierungsinhibierende Polycarboxylat-Zusätze in phosphatfreien Waschmitteln bewährt und wünschenswert ist.

In EP-A-0 398 724 wird die Herstellung von Copolymeren aus 3 bis 65 Gewichtsprozent ungesättigten Dicarbonsäuren und 97 bis 35 Gewichtsprozent ungesättigten Monocarbonsäuren oder ungesättigten carboxylgruppenfreien Monomeren beansprucht. In den Beispielen werden dabei auch Terpolymere aus Maleinsäure, Acrylsäure und kleinen Mengen Vinylacetat in wäßriger Phase hergestellt. Dabei werden alle Monomere einschließlich Initiator zur Polymerisation in heißes Wasser eindosiert.

Dieses Verfahren ist für wenig reaktive Monomere, wie Maleinsäure, ungünstig. Ferner werden hier relativ hohe Initiatormengen von vorzugsweise 0,5 bis 20 Gewichtsprozent sowie Metallsalzaktivatoren benötigt.

Aufgabe der vorliegenden Erfindung ist es daher, für den Waschmittelbereich und im besonderen als Cobuilder gut geeignete und biologisch gut abbaubare Polymere in wäßrigem Medium unter Vermeidung hoher Initiatormengen und von Metallsalzaktivatoren herzustellen.

Die Aufgabe wird dadurch gelöst, daß man bei der Polymerisation die Dicarbonsäure, ihr Alkali- oder Ammoniumsalz oder Mischungen der Dicarbonsäure mit ihren Salzen vorlegt, die Monocarbonsäure, ihr Alkali- oder Ammoniumsalz oder Gemische der Monocarbonsäure mit ihren Salzen zudosiert, das keine freien Carboxylgruppen enthaltende Monomer entweder vorlegt oder zudosiert oder teilweise vorlegt und zudosiert und darauf achtet, daß die Mono- und die Dicarbonsäure zusammen zu 30 bis 80 Mol-% neutralisiert sind, also als Salz vorliegen. Die Polymerisation wird dabei erfindungsgemäß in Gegenwart von grenzflächenaktiven Verbindungen durchgeführt.

Geeignete monoethylenisch ungesättigte Dicarbonsäuren sind beispielsweise Maleinsäure, Fumarsäure, Itaconsäure oder Mesaconsäure. Es können auch Anhydride eingesetzt werden, die in wäßrigem Medium zu den zugehörigen Dicarbonsäuren hydrolysieren. Vorzugsweise wird Maleinsäure oder Maleinsäureanhydrid verwendet.

Beispiele für monoethylenisch ungesättigte Monocarbonsäuren sind Acrylsäure, Methacrylsäure, Crotonsäure, Vinylessigsäure, Angelica- und Tiglinsäure. Verwendbar sind auch Halbester der obengenannten Dicarbonsäuren, wobei die Esteralkylreste 2 bis 4 C-Atome aufweisen sollten. Vorzugsweise werden Acrylsäure und Methacrylsäure eingesetzt.

Geeignete Alkalisalze sind vorzugsweise das Natrium- und Kaliumsalz. Unter Ammoniumsalzen werden auch Salze organischer Amine verstanden. Beispiele für derartige Amine sind Trialkylamine, deren Alkylgruppen 1 bis 4 C-Atome aufweisen, Hydroxylamin oder auch Mono-, Di- und Trialkylamine, deren Alkylketten 1 bis 4 C-Atome enthalten. Bei der Herstellung der Salze kann man auch von Mischungen organischer Amine ausgehen.

Die Mono- und Dicarbonsäure werden zusammen vorzugsweise zu 40 bis 60 Mol-% als Salz für die Polymerisation eingesetzt.

Dabei kann man die Dicarbonsäure in Form ihres Salzes und die Monocarbonsäure in freier Form oder teilneutralisiert einsetzen, wobei die Dicarbonsäure vorzugsweise zu einem höheren oder höchstens gleichen Grad wie die Monocarbonsäure neutralisiert ist. Besonders vorteilhaft ist der Einsatz der Mono- und Dicarbonsäure mit einem etwa gleichen Neutralisationsgrad, wobei sich im allgemeinen ein pH-Wert von 4 bis 5 im Polymerisationsmedium einstellt.

Als keine freien Carboxylgruppen aufweisendes, ethylenisch ungesättigtes Monomer kann beispielsweise Vinylacetat, Vinylether, Vinylglykol, Hydroxyethyl- und Hydroxypropylacrylat, (Meth)Acrylsäuremethylester und Vinylencarbonat eingesetzt werden. Bevorzugtes Monomer dieser Gruppe ist jedoch Vinylacetat.

Diese Monomere können als Komponente c teilweise vorgelegt und zudosiert werden. So kann es von Vorteil sein, 5 bis 50 % der Komponente c zusammen mit einem geringen Anteil an Initiator sofort der vorgelegten Dicarbonsäurekomponente a zuzusetzen. Es ist auch möglich, das wasserlösliche Monomer b zusammen mit dem weniger wasserlöslichen Monomer c in Gegenwart von Tensiden zu einer stabilen Monomerenemulsion vorzuemulgieren und diese aus einem Dosiergefäß zur Dicarbonsäurevorlage zuzusetzen. Hierdurch wird eine Verfahrensvereinfachung mit einer Reduzierung der Anzahl der Dosierströme ermöglicht.

Bezogen auf das Monomerengemisch wird Komponente a vorzugsweise zu 20 bis 50 Gewichtsprozent, Komponente b vorzugsweise zu 30 bis 70 Gewichtsprozent und Komponente c vorzugsweise zu 5 bis 40 Gewichtsprozent eingesetzt. Dabei beziehen sich die Mengenangaben bei den Komponenten a und b auf die freie Di- bzw. Monocarbonsäure . Komponente c wird im besonderen in Mengen von 10 bis 35, besonders bevorzugt in Mengen von 20 bis 30, Gewichtsprozent verwendet.

Geeignete grenzflächenaktive Verbindungen sind vor allem anionische und nichtionische Tenside, wobei auch Mischungen dieser Tenside eingesetzt werden können.

Zu den anionischen Tensiden gehören die Natriumalkylbenzolsulfonate, Alkansulfonate, Fettalkoholsulfate und Fettalkoholpolyglykolethersulfate. Im einzelnen seien genannt C8- bis C12-Alkylbenzolsulfonate- C12- bis C16-Alkansulfonate, wie beispielsweise Na-Dodecansulfonat, C12- bis C16-Alkylsulfate, wie beispielsweise Na-Laurylsulfat, C12- bis C16-Alkylsulfosuccinate und sulfatierte ethoxylierte C12- bis C16-Alkanole. Außerdem eignen sich sulfatierte Fettsäurealkanolamide, α-Sulfofettsäureester, Fettsäuremonoglyceride oder Umsetzungsprodukte von 1 bis 4 Mol Ethylenoxid mit primären oder sekundären Fettalkoholen oder Alkylphenolen. Gut geeignet sind ferner carboxymethylierte Umsetzungsprodukte von 3 bis 20 Mol Ethylenoxid mit C12- bis C16-Fettalkoholen oder C8- bis C12-Mono- oder Dialkylphenolen sowie die Phosphorsäurepartialester von ethoxylierten C12- bis C16-Fettalkoholen.

Als nichtionische niedermolekulare Tenside sind die überwiegend wasserlöslichen Anlagerungsprodukte von 3 bis 40 Mol Ethylenoxid an 1 Mol Fettalkohol, Alkylphenol, Fettsäure, Fettamin, Fettsäureamid, Alkansulfonamid oder Sorbitanfettsäureester mit HLB-Werten von 8 bis 18 geeignet. Besonders geeignet sind die Anlagerungsprodukte von 5 bis 16 Mol Ethylenoxid an Kokos- oder Talgfettalkohole, an Oleylalkohol, an synthetische Alkohole mit 8 bis 18 C-Atomen sowie an Mono- oder Dialkylphenole mit 6 bis 14 C-Atomen in den Alkylresten.

Die Ethoxylierungsprodukte können gegebenenfalls zusätzlich bis zu 90 Gewichtsprozent Propylenoxid, bezogen auf den Gesamtgehalt an Alkylenoxid, enthalten. Die Anlagerungsprodukte, die Ethylen- und Propylenoxid einkondensiert enthalten, können gegebenenfalls durch zusätzliches Einkondensieren von Butylenoxid in Mengen bis zu 50 Gewichtsprozent, bezogen auf den Gesamtgehalt an Alkylenoxid, modifiziert sein.

Zu den gut geeigneten nichtionischen Tensiden gehören ferner die mit C4- bis C18-Alkylgruppen modifizierten Alkylpolyglucoside mit einem Oligomerisierungsgrad von 1 bis 10 der Glucoseeinheiten sowie die durch Umsetzung der genannten Alkylpolyglucoside mit Ethylenoxid erhältlichen wasserlöslichen Alkoxylierungsprodukte.

Als polymere nichtionische grenzflächenaktive Verbindungen eignen sich die durch Methylierung, Alkoxylierung mit Ethylen- oder Propylenoxid sowie durch Carboxymethylierung erhältlichen wasserlöslichen Cellulose- oder Stärkederivate, wie Methylcellulose, Hydroxyethyl- oder Hydroxypropylcellulose oder Carboxymethylcellulose.

Geeignet sind ferner teilverseifte Polyvinylacetate mit einem Verseifungsgrad von 50 bis 95 % sowie Pfropfpolymere von Vinylacetat auf Polyethylenglykol.

Die grenzflächenaktiven Verbindungen werden meist in Zusatzmengen von 0,1 bis 5 Gewichtsprozent, insbesondere von 0,5 bis 2 Gewichtsprozent, bezogen auf die Summe der Monomeren, eingesetzt. Bei der Polymerisation werden sie vorzugsweise zusammen mit der Dicarbonsäure vorgelegt.

Die Polymerisation wird vorzugsweise in Gegenwart von anionischen oder nichtionischen Tensiden durchgeführt. Dabei werden Mischungen dieser Tenside ebenfalls bevorzugt.

Als radikalbildenden Initiator verwendet man vorzugsweise Wasserstoffperoxid in Zusatzmengen von 0,5 bis 5 Gewichtsprozent, bezogen auf die Summe der Monomeren. Es ist jedoch auch möglich, Natrium-, Kalium- oder Ammoniumperoxodisulfat, alleine oder zusammen mit Wasserstoffperoxid zu verwenden. Vorteilhaft ist es, ein Peroxodisulfat in einer geringen Zusatzmenge von 0,2 bis 2 Gewichtsprozent, bezogen auf die Summe der Monomeren, entweder der Maleinatvorlage oder nach abgeschlossener Reaktion dem Polymerisationsansatz zuzusetzen und diesen noch 0,5 bis 2 Stunden zur Senkung des Restmonomerengehalts nachzuerhitzen.

Außerdem können die bei radikalischen Polymerisationen in wäßrigem Medium üblichen Regler, wie Thioglykolsäure oder Mercaptoethanol, in Zusatzmengen von 0,1 bis 5 Gewichtsprozent, bezogen auf die Summe der Monomeren, sowie reduzierend wirkende Zusatzstoffe, die die Zerfallsgeschwindigkeit der angegebenen Initiatoren erhöhen, wie Salze oder Komplexe von Schwermetallen, wie z. B. Kupfer, Kobalt, Mangan, Eisen, Vanadium, Nickel oder Chrom, zugesetzt werden. Dabei sind Zusatzmengen von 0,5 bis 10 ppm, berechnet als Schwermetall. ausreichend, Eisenspuren im genannten ppm-Bereich können bereits dadurch in die Reaktionsmischung geraten, daß man die Umsetzung in einem Eisenkessel durchführt. Ferner können Ascorbinsäure, Natriumsulfit, Natriumbisulfit oder Natriumformaldehydsulfoxylat (sog. Rongalit) in Mengen von 0,1 bis 5 Gewichtsprozent, bezogen auf die Summe der eingesetzten Monomeren, zugegeben werden.

Nach beendeter Polymerisation stellt man aus Anwendungsgründen die wäßrige Polymermischung in der Regel alkalisch ein, meist auf einen pH-Wert von 7 bis 9. In einer besonderen Ausführungsform der Erfindung werden die Ether- und Estergruppen der Polymeren nach der Polymerisation verseift, worauf meist noch eine die Molmasse senkende oxidative Nachbehandlung durchgeführt wird.

Für die Verseifung der Ether- und Estergruppen wird der Polymerisationsansatz durch Alkalizusatz auf einen pH-Wert von 9 bis 11 eingestellt und dann bei 30 bis 120 °C, vorzugsweise bei 50 bis 100 °C, 0,5 bis 2 sowie 3 und 5 Stunden erwärmt und anschließend nach Zusatz einer organischen Säure, wie Essigsäure, oder einer Mineralsäure, wie Schwefelsäure, auf einen pH-Wert von 7 bis 9 eingestellt.

Um die Eigenschaften der Terpolymeren für den Einsatz in Waschmitteln zu verbessern, kann es in manchen Fällen vorteilhaft sein, die neutralisierten oder verseiften Terpolymerlösungen nachträglich einer oxidativen Behandlung zu unterziehen. Zu diesem Zweck werden die Terpolymerlösungen nach Zusatz von 1 bis 20 Gewichtsprozent, vorzugsweise 1 bis 10 Gewichtsprozent, bezogen auf den Feststoffgehalt, eines Oxidationsmittels, wie H2O2, tert.-Butylhydroperoxid oder Chlorbleichlauge, 0,5 bis 2 sowie 3 und 5 Stunden bei 30 bis 120 °C, vorzugsweise bei 50 bis 80 °C, erhitzt. Durch die oxidative Behandlung werden der K-Wert und das Molekulargewicht der Terpolymeren erniedrigt und dadurch das Dispergiervermögen für hydrophile Schmutzteilchen - das ist ein Maß für das Schmutztragevermögen - erhöht.

Die durch Neutralisation und gegebenenfalls durch Verseifung und oxidative Behandlung erhaltenen Polymerlösungen können sofort als Waschmitteladditive verwendet werden, wobei sie direkt mit anderen, Wachmittelbestandteile enthaltenden wäßrigen Lösungen vereinigt und den üblichen Sprühprozessen unterworfen werden. Die Polymerlösungen können aber auch durch Eindampfen der Lösungen in getrockneter Pulverform isoliert und in pulverförmige Waschmittel eingearbeitet werden.

Das vorliegende Herstellverfahren ermöglicht das Arbeiten in wäßriger Phase. Hohe Initiatormengen und Aktivatoren sind nicht erforderlich, und es können hohe Mengen an in Wasser wenig löslichen Monomeren einpolymerisiert werden.

Die erfindungsgemäß hergestellten Terpolymeren zeigen gegenüber den aus der EP-A-0 075 820 bekannten Copolymeren eine gleich gute inkrustierungsinhibierende Wirkung beim Einsatz als Cobuilder in phosphatreduzierten oder phosphatfreien Wasch- und Reinigungsmitteln und darüber hinaus eine erhöhte biologische Abbaubarkeit von 70 bis 100 %.

Bei der Polymerisation geht man üblicherweise so vor, daß man zunächst eine wäßrige Lösung der Dicarbonsäure a oder ihres Salzes vorlegt. Anschließend fügt man innerhalb von 3 bis 10 Stunden die Monocarbonsäure b oder ihr Salz, den Initiator, zweckmäßigerweise ebenfalls in wäßriger Lösung, sowie das wenig wasserlösliche Monomere c mit getrennter Dosierung zu. Die Polymerisationstemperatur liegt meist zwischen 80 und 150 °C, vorzugsweise zwischen 90 und 120 °C. Als Reaktionsgefäß wählt man, sofern die Polymerisationstemperatur die Siedetemperatur des Monomeren c übersteigt, Druckgefäße, wie Autoklaven, die mit einem Anker-, Blatt-, Impeller- oder Mehrstufenimpulsgegenstromrührer ausgestattet sein können.

Das erfindungsgemäße Verfahren wird in Gegenwart von Tensiden durchgeführt, sein Verlauf entspricht einer Lösungspolymerisation. Das erfindungsgemäße Terpolymerisationsverfahren in Gegenwart von Tensiden führt überraschenderweise zu einer erhöhten, meist vollständigen Transparenz der verseiften Polymerlösungen.- Außerdem wird der Einbau des wenig wasserlöslichen Termonomeren beschleunigt, die Hydrolyse von Vinylacetat zu Acetaldehyd zurückgedrängt und der Restgehalt an monomeren Mono- und Dicarbonsäuren gesenkt.

### Beispiele

Allgemeine Vorschrift zur Herstellung von Terpolymeren aus Maleinsäure, Acrylsäure und Vinylacetat

In einem mit Ankerrührer, Manometer, drei Dosierleitungen einschließlich Dosierpumpen, Stickstoff- und Vakuumleitungen ausgerüsteten Edelstahlreaktor mit Heizmantel wird Maleinsäureanhydrid in vollentsalztem Wasser vorgelegt, unter Rühren bei 50 °C gelöst und mit 50%iger Natronlauge teilweise neutralisiert, wobei die Temperatur der Reaktorvorlage auf ca. 80 °C steigt. Der Reaktor wird dreimal abwechselnd mit Stickstoff auf 3 bar (= 3 x 105 Pa) abgepreßt und evakuiert. Danach wird auf die Reaktionstemperatur erhitzt.

### Verfahrensvariante I

Das Tensid wird zur Maleinatvorlage unter Rühren zugesetzt. Dann werden aus drei getrennten Dosierungen
a) Acrylsäure, die mit der angegebenen Wassermenge verdünnt wird und mit 50%iger Natronlauge teilneutralisiert sein kann, in 4 Stunden,
b) Vinylacetat in unverdünnter Form in 4 Stunden sowie
c) eine Initiatorlösung in 4,5 Stunden
zur Maleinatvorlage gleichmäßig zudosiert.

### Verfahrensvariante II

Es wird ein tensidhaltiges Monomerengemisch aus Acrylsäure, die mit Wasser verdünnt und mit 50%iger Natronlauge teilneutralisiert ist, Vinylacetat sowie dem Tensid unter Rühren hergestellt. Diese Emulsion wird aus einem Dosiergefäß innerhalb von 4 Stunden, eine Initiatorlösung innerhalb von 4,5 Stunden gleichmäßig zur Maleinatvorlage zudosiert.

Bei beiden Verfahrensvarianten wird nach beendetem Monomerenzulauf noch 2 Stunden bei 100 °C nacherhitzt. Die erhaltenen Polymerlösungen werden abgekühlt, entspannt und wie folgt aufgearbeitet:

### Aufarbeitung A

### Neutralisation

100 g erhaltene Polymerlösung werden mit 100 g vollentsalztem Wasser verdünnt und mit 50%iger Natronlauge bei Raumtemperatur auf einen pH-Wert von 7,5 eingestellt.

### Aufarbeitung B

### Neutralisation und Verseifung

Die nach Methode A erhaltene neutralisierte Polymerlösung wird mit weiterer 50%iger Natronlauge versetzt bis ein pH-Wert von 11 erreicht ist. Dann wird 5 Stunden unter Rückfluß gekocht. Danach wird abgekühlt und durch Zusatz von Essigsäure ein pH-Wert von 7,5 eingestellt.

### Aufarbeitung C

### Neutralisation, Verseifung und Oxidation

100 g der nach Methode B erhaltenen verseiften Polymerlösung werden nach Zusatz von 4 g 30%iger Wasserstoffperoxid-Lösung 3 Stunden unter Rückfluß gekocht bis mittels eines Peroxid-Teststreifens kein restliches Peroxid mehr nachweisbar ist.

An den Polymerlösungen werden folgende Untersuchungen durchgeführt:
1. Molmassen, bestimmt durch Gelpermeationschromatographie.
2. K-Werte nach Fikentscher, Cellulosechemie 13, 1932. Seite 60, bestimmt in 1%iger Lösung in Wasser bei 25 °C.
3. Restmonomergehalt an freier Maleinsäure, Acrylsäure und Vinylacetat, bestimmt durch Hochdruck-Flüssigkeits-Chromatographie.
4. Gesamt-Aldehydgehalt durch Anlagerung von Na-Bisulfit. Dabei bildet sich die unlösliche Additionsverbindung. Nach Beseitigung von überschüssigem Bisulfit durch Jodzusatz und Freisetzen des in der Bisulfit-Additionsverbindung enthaltenen Aldehyds wird der Gehalt durch Zusatz von Natriumbicarbonat und quantitative Jodtitration bestimmt.
5. Calciumcarbonat-Dispergierkapazität (CCDK) in mg CaCO3/g nach Richter-Winkler, Tenside Surfactants Detergents 24 (1987), No. 4, Seite 213: Trübungstitration unter Verwendung eines automatischen Titriergeräts (Mettler DL 25 mit Photoelektrode). Der CCDK-Wert ist ein Maß für die inkrustierungsinhibierende Wirkung.
6. Extinktion E bei 450 nm von einer 1-cm-Schicht einer Fe2O3-Aufschlänmung (40 g/l) in einer wäßrigen Lösung der Prüfsubstanz (10 g/l) nach 24 Stunden Absitzzeit. Eine hohe Extinktion zeigt eine hohe Trübung und damit ein gutes Dispergier- bzw. Suspendiervermögen für hydrophile Schmutzteilchen an.
7. Grenzflächenspannung in mN/m einer 0,5%igen Polymerlösung gegenüber Paraffinöl bei 25 °C.

### Herstellung von Terpolymeren aus Acrylsäure, Maleinsäureanhydrid und Vinylacetat mit dem Einsatzverhältnis 54,3 : 23,5 : 22.2 Gewichtsprozent

### Vergleichsbeispiel A

### (ohne Tensidzusatz, Variante I)

Im Reaktor werden 250 g Maleinsäureanhydrid in 600 g Wasser gelöst und mit 205 g 50%iger Natronlauge zu 50 % neutralisiert. Bei einer Polymerisationstemperatur von 105 °C werden
a) eine zu 50 % teilneutralisierte Acrylsäurelösung aus 578 g Acrylsäure, 400 g Wasser und 321 g 50%iger Natronlauge,
b) 237 g Vinylacetat und
c) eine Initiatorlösung aus 40 g Na-Peroxodisulfat und 150 g Wasser zudosiert.

Nach Neutralisation der erhaltenen Polymerlösung resultiert eine hellbraune, trübe, stechend riechende Lösung mit einem Feststoffgehalt von 26 Gewichtsprozent.

### Beispiel 1

### (Variante I)

Es wird wie im Vergleichsbeispiel A verfahren. Man setzt jedoch 60 g einer 20%igen Na-Dodecansulfonat-Lösung (MERSOLAT® K 30, Bayer AG, D-51368 Leverkusen) zur Maleinatvorlage zu.

Es resultiert - nach Neutralisation - eine hellgelbe, klare, kaum riechende Polymerlösung mit einem Feststoffgehalt von 26 Gewichtsprozent.

### Beispiel 2

### (Variante I)

Es wird wie im Vergleichsbeispiel A verfahren. Man setzt jedoch 25 g eines C12-C14-Fettalkoholpolyglykolethers (MARLIPAL® 1217, Hüls AG, D-45764 Marl) zur Maleinatvorlage zu.

Die erhaltene Polymerlösung zeigt nach Neutralisation eine hellgelbe Farbe, transparentes Aussehen und einen nur schwachen Geruch.

### Beispiel 3

### (Variante I)

Es wird wie im Vergleichsbeispiel A verfahren. Man setzt jedoch 25 g eines Sorbitan-Polyethylenglykoletherdodecansäureesters (TWEEN® 20, Fa. Atlas, Wilmington, Del., USA) zur Maleinatvorlage zu.

Das neutralisierte Endprodukt entspricht hinsichtlich heller Farbe, Klarheit und schwachem Geruch dem Produkt von Beispiel 2.

### Beispiel 4

### (Variante I)

Es wird wie im Vergleichsbeispiel A verfahren. Man setzt jedoch 25 g eines zu 88 % verseiften Polyvinylacetats (POVAL® 220 E, Fa. Kuraray) zur Maleinatvorlage zu.

Die neutralisierte Polymerlösung ist hellgelb und geruchsarm.

### Beispiel 5

### (Variante I)

Es wird wie im Vergleichsbeispiel A verfahren. Man setzt jedoch 12 g (berechnet als Festprodukt) eines carboxymethylierten C12-C14-Fettalkohol-Polyethylenglykolethers (MARLINAT® CM 100, Hüls AG) zur Maleinatvorlage zu.

Es resultiert eine helle, klare, geruchsarme neutralisierte Polymerlösung.

Aus der folgenden Tabelle gehen die Produkteigenschaften der neutralisierten Terpolymerlösungen hervor.

**Tabelle 1**

| Bsp. | Restmonomere (ppm) | | | Molmasse Mw | CCDK mg CaCO3/g |
|---|---|---|---|---|---|
| | MS | AS | Aldehyde | | |
| A | 4 290 | 400 | 420 | 56 800 | 144 |
| 1 | < 100 | 254 | 380 | 65 200 | 175 |
| 2 | < 100 | 128 | 400 | 70 100 | 183 |
| 3 | 140 | 60 | 310 | 84 000 | 185 |
| 4 | 160 | 90 | 170 | 67 000 | 154 |
| 5 | 400 | 180 | 240 | 63 000 | 156 |
| MS = Maleinsäure | | | | | |
| AS = Acrylsäure | | | | | |

Diese Ergebnisse belegen quantitativ den positiven Einfluß des erfindungsgemäßen Tensidzusatzes bei der Terpolymerisation auf den Restmonomergehalt und die CCDK.

Die gemäß Vergleichsbeispiel A und den Beispielen 1 und 2 erhaltenen neutralisierten Polymerlösungen werden auch nach den Methoden B und C aufgearbeitet. Dabei findet ein Molmassenabbau statt (vgl. Tabelle 2).

**Tabelle 2**

| Bsp. | Aufarbeitung | CCDK mg CaCO3/g | Extinktion E | Grenzflächenspannung N/m | K-Wert |
|---|---|---|---|---|---|
| A | A | 144 | < 10 | 27,5 | 35 |
| | B | 142 | < 10 | 28,5 | 32 |
| | C | 143 | 30 | 31,0 | 28 |
| 1 | A | 175 | < 10 | 9,0 | 46 |
| | B | 161 | < 10 | 11,5 | 41 |
| | C | 160 | 40 | 26,5 | 27 |
| 2 | A | 183 | < 10 | 9,5 | 51 |
| | B | 181 | < 10 | 18,0 | 48 |
| | C | 155 | 45 | 19,5 | 26 |

Aus den Ergebnissen ist ersichtlich, daß die gemäß den Erfindungsbeispielen hergestellten Terpolymerlösungen auch bei unterschiedlicher Nachbehandlung im Vergleich zu dem Vergleichsversuch nicht nur eine erhöhte CCDK, sondern auch eine niedrigere Grenzflächenspannung und damit eine bessere Eignung als Waschmittelzusatz zeigen. Durch die oxidative Nachbehandlung wird auch das Schmutztragevermögen verbessert.

### Herstellung von Terpolymeren aus Acrylsäure, Maleinsäureanhydrid und Vinylacetat mit dem Einsatzyerhältnis 46,6 : 31,1 : 22,3 Gewichtsprozent

### Vergleichsbeispiel B

### (ohne Tensidzusatz)

Im Reaktor werden 330 g Maleinsäureanhydrid, gelöst in 700 g Wasser und neutralisiert mit 270 g 50%iger Natronlauge, sowie 199 g Vinylacetat (50 % der Gesamtmenge) vorgelegt. Dann werden aus getrennten Dosierungen
a) eine zu 50 % neutralisierte Acrylsäurelösung, hergestellt aus 495 g Acrylsäure, 300 g Wasser und 275 g 50%iger Natronlauge,
b) 119 g Vinylacetat sowie
c) eine Initiatorlösung aus 150 g 30%igem Wasserstoffperoxid und 100 g Wasser bei einer Polymerisationstemperatur von 105 °C zudosiert.

### Beispiel 6

Es wird wie in Vergleichsbeispiel B verfahren. Man setzt jedoch 60 g einer 20%igen Na-Dodecansulfonat-Lösung (MERSOLAT® K 30) zur Maleinatvorlage zu.

### Beispiel 7

Es wird wie im Beispiel 6 verfahren. Die Zugabe des Vinylacetats erfolgt jedoch auf die Weise, daß 60 g (25 % der Gesamtmenge) in der Maleinatvorlage eingesetzt und 178 g (75 % der Gesamtmenge) zudosiert werden.

Nach Aufarbeitung gemäß Methode B werden Polymerlösungen mit folgenden Eigenschaften erhalten:

**Tabelle 3**

| Bsp. | Restmonomere (ppm) | | | Molmasse Mw | CCDK mg CaCO3/g |
|---|---|---|---|---|---|
| | MS | AS | Aldehyde | | |
| B | 4 500 | 600 | 640 | 20 700 | 168 |
| 6 | 400 | 500 | 560 | 28 200 | 167 |
| 7 | 214 | 180 | 110 | 24 000 | 168 |
| MS = Maleinsäure | | | | | |
| AS = Acrylsäure | | | | | |

Die Meßwerte zeigen den positiven Einfluß des erfindungsgemäßen Tensidzusatzes bei der Polymerisation auf den Restmonomergehalt.

### Herstellung von Terpolymeren aus Acrylsäure, Maleinsäureanhydrid und Vinylacetat mit dem Einstzverhältnis 42,4 : 35,5 : 22,1 Gewichtsprozent

### Vergleichsbeispiel C

### (ohne Tensidzusatz, Variante II)

Es wird eine Maleinatvorlage aus 380 g Maleinsäureanhydrid, 700 g Wasser und 310 g 50%iger Natronlauge hergestellt und auf 105 °C erhitzt. Dann werden eine Monomeremulation aus 237 g Vinylacetat und 455 g Acrylsäure, die mit 300 g Wasser verdünnt und mit 253 g 50%iger Natronlauge teilneutralisiert ist, und eine Initiatorlösung aus 150 g 30%igem Wasserstoffperoxid und 100 g Wasser dosiert. Im Verlauf der Polymerisation steigt der Reaktorinnendruck nach 1 Stunde auf 2,3 bar, nach 2 Stunden auf 3,5 bar und nach 3 Stunden auf 4 bar an.

Es resultiert eine gelb-trübe, stechend riechende Polymerlösung mit einem Feststoffgehalt von 46 %, einem K-Wert von 26, einem Aldehydgehalt von 0,7 % und einer CCDK von 253 mg CaCO3/g.

### Beispiel 8

### (Variante II)

Hinsichtlich der Polymerisationsdurchführung wird wie im Vergleichsbeispiel C verfahren. Es werden jedoch 22 g, berechnet als Festprodukt, eines carboxymethylierten C13-Fettalkoholpolyethylenglykolethers (MARLOWET® 4538, Hüls AG) zusammen mit der Acrylat-Vinylacetat-Monomerenemulsion dosiert. Während der Polymerisation steigt der Reaktorinnendruck nach 1 Stunde auf 1,9 bar, nach 2 Stunden auf 3,1 bar und nach 3 Stunden auf 3,8 bar an.
Es wird eine hellgelbe, klare Polymerlösung mit einem Feststoffgehalt von 45 %, einem K-Wert von 27, einem Aldehydgehalt von 0,22 % und einer CCDK von 290 mg CaCO3/g erhalten.

Im erfindungsgemäßen Beispiel 8 steigt also der Druck in geringerem Maß als im Vergleichsbeispiel C. Dieses Ergebnis zeigt eine höhere Umsatzgeschwindigkeit an.

## Patentansprüche

1. Verfahren zur Herstellung von Terpolymeren durch radikalische Polymerisation in wäßrigem Medium, wobei
die Komponente a, eine monoethylenisch ungesättigte C4- bis C6-Dicarbonsäure, ihr Alkali- und /oder ihr Ammoniumsalz, vorgelegt wird,
die Komponente b, eine monoethylenisch ungesättigte C3- bis C5-Monocarbonsäure, ihr Alkali- und/oder ihr Ammoniumsalz, zudosiert wird,
die Komponente c, ein keine freien Carboxylgruppen enthaltendes,
ethylenisch ungesättigtes Monomer, vorgelegt und/oder zudosiert wird und die Komponenten a und b zusammen zu 30 bis 80 Mol-% als Salz vorliegen,
dadurch gekennzeichnet,
daß man die Polymerisation in Gegenwart von grenzflächenaktiven Verbindungen durchführt.

2. Verfahren nach Anspruch 1, dadurch gekennzeichnet, daß
Komponente a zu 20 bis 50 Gewichtsprozent,
Komponente b zu 30 bis 70 Gewichtsprozent und
Komponente c zu 5 bis 40 Gewichtsprozent eingesetzt wird.

3. Verfahren nach Anspruch 2, dadurch gekennzeichnet, daß Komponente c zu 10 bis 35 Gewichtsprozent eingesetzt wird, wobei der Gehalt vorzugsweise zwischen 20 und 30 Gewichtsprozent liegt.

4. Vefahren nach Anspruch 1, dadurch gekennzeichnet, daß die Dicarbonsäure Maleinsäure, die Moncarbonsäure (Meth)Acrylsäure und das keine freien Carboxylgruppen enthaltende Monomer Vinylacetat ist.

5. Verfahren nach Anspruch 1. dadurch gekennzeichnet, daß die Komponenten a und b zusammen zu 40 bis 60 Mol-% als Salz vorliegen.

6. Verfahren nach Anspruch 1, dadurch gekennzeichnet, daß die Polymerisation in Gegenwart von anionischen und/oder nichtionischen Tensiden durchgeführt wird.

7. Verfahren nach Anspruch 1, dadurch gekennzeichnet, daß, bezogen auf die Summe der Monomeren, in Gegenwart von 0,1 bis 5 Gewichtsprozent, vorzugsweise von 0,5 bis 2 Gewichtsprozent, grenzflächenaktiven Verbindungen polymerisiert wird.

8. Verfahren nach Anspruch 1, dadurch gekennzeichnet, daß das Terpolymer nach der Polymerisation einer Verseifung oder einer Verseifung und einer oxidativen Nachbehandlung unterworfen wird.

## Claims

1. A process for producing terpolymers by free-radical polymerization in an aqueous medium, wherein
component a), a monoethylenically unsaturated C₄-C₆ dicarboxylic acid, the alkali and/or ammonium salt thereof is precharged,
component b), a monoethylenically unsaturated C₃-C₅ monocarboxylic acid, the alkali and/or ammonium salt thereof is metered,
component c), an ethylenically unsaturated monomer not containing any free carboxyl groups, is precharged and/or metered, and the components a) and b) together are present as salts at a level of from 30 to 80 mole-%,
characterized in that the polymerization is performed in the presence of surface-active compounds.

2. The process according to claim 1, characterized in that
component a) is used with 20 - 50% by weight,
component b) with 30 - 70% by weight, and
component c) with 5 - 40% by weight.

3. The process according to claim 2, characterized in that component c) is used with 10 - 35% by weight, the content preferably being between 20 and 30% by weight.

4. The process according to claim 1, characterized in that the dicarboxylic acid is maleic acid, the monocarboxylic acid is (meth)acrylic acid, and the monomer not containing any free carboxyl groups is vinyl acetate.

5. The process according to claim 1, characterized in that the components a) and b) together are present as salts at a level of from 40 to 60 mole-%.

6. The process according to claim 1, characterized in that the polymerization is performed in the presence of anionic and/or non-ionic surfactants.

7. The process according to claim 1, characterized in that polymerization is effected in the presence of from 0.1 to 5% by weight, preferably from 0.5 to 2% by weight of surface-active compounds, relative to the sum of monomers.

8. The process according to claim 1, characterized in that following polymerization, the terpolymer is subjected to saponification or saponification and an oxidative subsequent treatment.

## Revendications

1. Procédé de préparation de terpolymères par la polymérisation radicalaire en milieu aqueux, conformément auquel on utilise au préalable le composant a, à savoir un acide dicarboxylique en C4 à C6, monoéthyléniquement insaturé, son sel de métal alcalin et/ou son sel d'ammonium,
on introduit de manière dosée le composant b, à savoir un acide monocarboxylique en C3 à C5, monoéthyléniquement insaturé, son sel de métal alcalin et/ou son sel d'ammonium,
on utilise au préalable et/ou on ajoute de manière dosée le composant c), à savoir un monomère éthyléniquement insaturé, ne contenant pas de radicaux carboxyle libres et les composants a et b ensemble se présentent jusqu'à 30 à 80% molaires, sous forme de sel,
caractérisé en ce que on entreprend la polymérisation en présence de composés tensioactifs ou surfactifs.

2. Procédé suivant la revendication 1, caractérisé en ce que l'on utilise le composant a) jusqu'à 20 à 50% en poids,
le composant b jusqu'à 30 à 70% en poids et
le composant c jusqu'à 5 à 40% en poids.

3. Procédé suivant la revendication 2, caractérisé en ce que l'on utilise le composant c jusqu'à 10 à 35% en poids, où la teneur se situe, de préférence, entre 20 et 30% en poids.

4. Procédé suivant la revendication 1, caractérisé en ce que l'acide dicarboxylique est l'acide maléique, l'acide monocarboxylique est l'acide (méth)acrylique et le monomère ne contenant pas de radicaux carboxyle libres est l'acétate de vinyle.

5. Procédé suivant la revendication 1, caractérisé en ce que les composants a et b ensemble se présentent en une proportion variant de 40 à 60% molaires sous forme de sel.

6. Procédé suivant la revendication 1, caractérisé en ce que l'on entreprend la polymérisation en présence d'agents tensioactifs ou surfactifs anioniques et/ou non ioniques.

7. Procédé suivant la revendication 1, caractérisé en ce que, par rapport à la somme des monomères, on opère la polymérisation en présence de 0,1 à 5% en poids, de préférence, 0,5 à 2% en poids, de composés tensioactifs ou surfactifs.

8. Procédé suivant la revendication 1, caractérisé en ce que l'on soumet le terpolymère, après la polymérisation, à une saponification, ou à une saponification et un posttraitement oxydant.
